# EUROPEAN PATENT APPLICATION

(11) **EP 4 748 639 A2**
(43) Date of publication of application: **27.05.2026**
(21) Application number: 26171558.5
(22) Date of filing: 10.02.2023
(51) Int. Cl.: B60N 2/42

(54) **INERTIA LATCH FOR A VEHICLE ARMREST**

(30) Priority: 11.02.2022 CN 202210127109; 12.10.2022 CN 202211247606
(62) Divisional of application: 23712760.0
(71) Applicant: Tesla, Inc., Austin, TX 78725 (US)
(72) Inventor: WU, Chao, Austin, Texas, 78725 (US); CHEN, Mingxin, Austin, Texas, 78725 (US); SHEN, Tao, Austin, Texas, 78725 (US); LYU, Tian, Austin, Texas, 78725 (US)
(74) Representative: Bryn-Jacobsen, Caelia

(57) **Abstract**

A vehicle seating assembly is provided and includes an armrest configured to rotate about an axis and between an up position and a down position. An inertia latch has a ratchet and is configured to move between a disengaged position and an engaged position to inhibit unintended movement of the armrest in the event of a collision. Certain implementations include one or more gears.

## Description

### TECHNICAL FIELD

This application relates to a safety system for a vehicle seating assembly. More particularly, the safety system includes an inertia latch which moves between an disengaged position and an engaged position to inhibit unintended movement of an armrest in the event of a collision.

### BACKGROUND

Generally described, a variety of vehicles, such as electric vehicles, combustion engine vehicles, hybrid vehicles, etc., can be configured with a fold-out armrest for a seating assembly, e.g., a front or rear bench seat. More specifically, the armrest can be integrated into a rear bench seat and fold away between the back seats to allow for a central seating place to be used. If an accident occurs, e.g. head-on collision, rear-end collision, the armrest may rapidly rotate relative the seat depending on the position of the armrest and a direction of vehicle impact. Protective structures and methods may be incorporated into the vehicle to inhibit unintended movement of the armrest in the event of a collision to protect passengers.

### SUMMARY

An aspect is directed to a vehicle seating assembly comprising an armrest configured to rotate about an axis and between an up position and a down position, a lock plate, a spin plate configured to rotate with the armrest about the axis and having a channel, and a pawl disposed relative to the channel so as to move between a disengaged position and an engaged position. The pawl is biased to move towards the disengaged position by a biasing force. The pawl is disengaged from the lock plate when the pawl is in the disengaged position so as to allow the armrest to move between the up position and the down position. The pawl engages with the lock plate when the pawl is in the engaged position so as to inhibit movement of the armrest towards at least the down position.

A variation of the aspect above is, wherein the pawl is configured to move from the disengaged position to the engaged position when a magnitude of a change in velocity of the spin plate causes inertia of the pawl to overcome the biasing force.

A variation of the aspect above is, wherein the armrest is further configured to rotate relative to a seatback of the vehicle seating assembly.

A variation of the aspect above is, wherein the lock plate is fixed relative to the seatback.

A variation of the aspect above is, wherein the spin plate is configured to rotate with the armrest and relative to the lock plate.

A variation of the aspect above is, wherein the change in velocity is a change in linear velocity.

A variation of the aspect above further comprises a spring, the spring being configured to apply the biasing force to the pawl.

A variation of the aspect above is, wherein the spin plate further comprises an aperture, and wherein the pawl comprises a post, the aperture and the post supporting the spring.

A variation of the aspect above further comprises a bracket, the bracket being rotationally fixed relative to the lock plate.

A variation of the aspect above further comprises a shaft defining the axis, the spin plate being coupled to the shaft.

An aspect is directed to a vehicle seating assembly comprising an armrest configured to rotate about an axis and between an up position and a down position, a spin plate configured to rotate with the armrest about the axis, a lock plate being configured to selectively rotate with the spin plate, a finger configured to move between an engaged position and a disengaged position relative to the lock plate, the finger preventing the lock plate from rotating with the spin plate when in the engaged position, and a pawl supported by the lock plate and the spin plate. The pawl is configured to move between an engaged position and a disengaged position. The pawl locks the spin plate to the lock plate when the finger is in the engaged position so as to inhibit movement of the armrest towards at least the down position.

A variation of the aspect further comprises a ball disposed in a receptacle, the ball being configured to move the finger from the disengaged position to the engaged position in response to a magnitude of a change in velocity of the receptacle that causes inertia of the ball to move within the receptacle.

A variation of the aspect above further comprises a hat supported at least in part by the ball, the finger being supported by the hat.

A variation of the aspect above is, wherein the hat is configured to pivot between a first position and a second position in response to the ball moving within the receptacle.

A variation of the aspect above is, wherein the armrest is further configured to rotate relative to a seatback of the vehicle seating assembly.

A variation of the aspect above is, wherein the finger is fixed relative to the seatback.

A variation of the aspect above is, wherein the change in velocity is a change in linear velocity.

A variation of the aspect above is, wherein the spin plate is disposed within the lock plate.

A variation of the aspect above is, wherein at least a portion of the pawl is disposed between the spin plate and the lock plate.

An aspect is directed to a vehicle seating assembly comprising an armrest configured to rotate about an axis and between an up position and a down position, and an inertia latch having a ratchet and being configured to move between a disengaged position and an engaged position to inhibit unintended movement of the armrest in the event of a collision.

An aspect is directed to a vehicle seating assembly comprising an armrest configured to rotate about an axis and between an up position and a down position, a spin plate, one or more gears coupling the armrest to the spin plate so that the spin plate has a greater rate of angular rotation than the armrest, a tooth plate, a lock plate or pinion being configured to selectively rotate with the spin plate, a finger configured to move between an engaged position and a disengaged position relative to the lock plate or pinion, the finger preventing the lock plate or pinion from rotating when in the engaged position, and a pawl configured to move between an engaged position and a disengaged position, the pawl locking the spin plate to the tooth plate when the finger is in the engaged position.

A variation of the aspect above further comprises a ball disposed in a receptacle, the ball being configured to move the finger from the disengaged position to the engaged position in response to a magnitude of a change in velocity of the receptacle that causes inertia of the ball to move within the receptacle.

A variation of the aspect above further comprises a hat supported at least in part by the ball, the finger being supported by the hat.

A variation of the aspect above is, wherein the hat is configured to pivot between a first position and a second position in response to the ball moving within the receptacle.

A variation of the aspect above is, wherein the armrest is further configured to rotate relative to a seatback of the vehicle seating assembly.

A variation of the aspect above is, wherein the finger is fixed relative to the seatback.

A variation of the aspect above is, wherein the change in velocity is a change in linear velocity.

A variation of the aspect above is, wherein the spin plate is disposed within the tooth plate.

A variation of the aspect above is, wherein at least a portion of the pawl is disposed between the spin plate and the tooth plate.

An aspect is directed to an inertia latch configured to prevent rotation of an armrest about an axis and between an up position and a down position. The inertia latch comprises a spin plate, one or more gears configured to couple the armrest to the spin plate, a tooth plate, a lock plate or pinion being configured to selectively rotate with the spin plate, and a pawl configured to selectively prevent rotation of the spin plate relative to the tooth plate.

A variation of the aspect above is, wherein the spin plate has a greater rate of angular rotation than the armrest.

### BRIEF DESCRIPTION OF THE DRAWINGS

The present inventions are described with reference to the accompanying drawings, in which like reference characters reference like elements, and wherein:
**Figure 1A** is an exemplary perspective view of an armrest and seatback of a vehicle seating assembly that includes an inertia latch which provides passenger safety.
**Figure 1B** is an exemplary illustration of portions of the armrest from Figure 1A and shows the inertia latch configured to inhibit unintended movement of the armrest in the event of a collision to protect passengers.
**Figure 1C** is a plan view of the inertia latch from Figure 1B and shows a pawl in a disengaged position.
**Figure 2A** is similar to Figure 1A except the armrest is in a down position.
**Figure 2B** is a plan view of the inertia latch from Figure 2A and shows the pawl still in the disengaged position when the armrest is in the down position.
**Figure 3A** is a plan view of the inertia latch from Figure 1B at a time before the inertia latch experiences a change in velocity that is sufficient to cause the pawl to move to an engaged position.
**Figure 3B** is a plan view similar to Figure 3A except the inertia latch is experiencing a change in velocity that is sufficient to cause the pawl to start moving towards the engaged position.
**Figure 4A** is a plan view similar to Figure 3B except the inertia latch is experiencing a change in velocity that is sufficient to cause the pawl to move to the engaged position.
**Figure 4B** is a plan view similar to Figure 4A except the spin plate and armrest have rotated slightly in a counter-clockwise direction towards the down position to cause at least one tooth on the pawl to tightly engage with at least one tooth on the lock plate inhibiting further movement of the armrest towards the down position.
**Figure 5A** is similar to Figure 1A and shows an interim position of the armrest after the armrest has initially moved to the up position before slightly rebounding in a direction towards the down position.
**Figure 5B** shows a final position of the armrest after slightly rebounding in the direction towards the down position.
**Figure 6** is an exploded view of the armrest and inertia latch from Figure 1B.
**Figure 7** is an exemplary perspective view of another embodiment of an armrest and seatback of a vehicle seating assembly that includes an inertia latch which provides passenger safety.
**Figure 8** is a plan view of the inertia latch from Figure 7 at a time before a ball and finger of the inertia latch experience a change in velocity that is sufficient to cause the finger to engage a lock plate preventing rotation of the lock plate.
**Figure 9** is similar to Figure 8 except the finger has locked the lock plate preventing its rotation.
**Figure 10** is similar to Figure 9 except a spin plate and the armrest have rotated slightly in a counter-clockwise direction towards the down position to cause the spin plate to push a pawl to tightly engage with the lock plate inhibiting or preventing further movement of the armrest towards the down position.
**Figure 11** is an exploded view of an armrest and inertia latch that is similar to what is illustrated in Figure 7 except the inertia latch in Figure 11 includes one or more gears.
**Figure 12** includes views of the one or more gears and of the inertia latch from Figure 11 in an assembled state.
**Figure 13** illustrates an example of an amount of rotation before the inertia latch is locked.
**Figure 14** illustrates advantages of the inertia latch of Figure 11.

### DETAILED DESCRIPTION

Generally described, one or more aspects of the present disclosure relate to a safety system for a vehicle seating assembly. In certain embodiments, the disclosure relates to an inertia latch for an armrest that includes a ratchet. The armrest is configured to rotate about an axis and between an up position and a down position. A spin plate of the inertia latch rotates with the armrest. In certain embodiments, a lock plate of the inertia latch does not rotate with armrest. In certain other embodiments, the lock plate of the inertia latch selectively rotates with armrest. In certain embodiments, a pawl selectively engages with the lock plate to inhibit rotation of the armrest.

In certain embodiment, the pawl can be disposed in a channel of the spin plate and move between a disengaged position and an engaged position depending on a magnitude of inertia experienced by the pawl. The pawl can be biased to move towards the disengaged position by a biasing force, e.g., spring. When in the disengaged position, the pawl allows the armrest to move between the up position and the down position. When in the engaged position, the pawl engages with the lock plate so as to inhibit movement of the armrest towards at least the down position in certain embodiments. For example, the pawl and the lock plate can be configured to inhibit rotation towards one or both of the up and down positions.

The pawl can move from the disengaged position to the engaged position when a magnitude of a change in velocity of the spin plate causes inertia of the pawl to overcome the biasing force.

In the case of a fold-out armrest which is integrated into the rear seat bench of a motor vehicle, the inertia latches disclosed herein overcome the tendency of the armrest to fold in or out in proximity of the passengers in the event of an accident (e.g., head-on collision, rear-end collision). The safety of the passengers is enhanced by the inertia latch locking rotation of the armrest and preventing unintended rapid rotation of the armrest. In certain embodiments, when the inertia latch is activated the armrest is only able to rotates towards the up position. Once in the up position, the armrest is inhibited from rotating towards the down position.

The inertia latches are activated because certain structures of the inertia latchets are sensitive to acceleration. In certain embodiments, the spin plate and/or a ball is sensitive to acceleration (i.e., change in velocity). For example, the pawl of the spin plate can lock to the lock plate when the acceleration exceeds a predetermined threshold value (e.g., 2.5 g). For example, in other embodiments, the ball can cause a finger to lock rotation of the lock plate when the acceleration exceeds the predetermined threshold value (e.g., 2.5 g). The inertia latches are not activated when acceleration is lower than the threshold value.

In certain embodiments, the pawl and spin plate can interface with each other using matching surfaces so as to allow the pawl to slide along a surface of the spin plate. In certain embodiments, the pawl and/or spin plate can comprise more than one tooth to reduce a degree of rebound or movement of the armrest once the inertia latch is activated. For example, additional teeth can reduce the time until the inertia latch is fully locked. Additional teeth can also increase the reliability of the inertia latch by distributing the torque caused by rotation of the armrest across more than one tooth. The inertia latches disclosed herein can be applicable to side armrest as well as other rotational, accessible accessories (e.g., table and leg rest).

Embodiments of the inertia latches provided herein can include one or more exemplary features, e.g., pawl moving in a channel, complementary teeth on the pawl and lock plate, biasing force/position, keyway between shaft and spin plate, ball and receptacle, and concentric rotating plates. The listed features are only exemplary and are not exhaustive of the features and advantages provided by the inertia latches disclosed herein. For example, an armrest that includes one of the inertia latches disclosed herein need not employ an unlock button or other structure on a front surface of the armrest. In this way, the inertia latches disclosed herein are essentially invisible to the passengers and do not require passenger activation. In certain embodiments, the inertia latches disclosed herein activate without any passenger intervention.

In certain embodiments, the biasing force (e.g., coil spring, gravity) can determine an actuation profile that controls positioning of the pawl relative to the spin plate when experiencing acceleration. For example, the rate or spring constant of a coil spring can be selected to ensure the pawl is in the engaged position when the acceleration exceeds the predetermined threshold value (e.g., 2.5 g). Of course the predetermined threshold is not limited to 2.5 g and can be any other value. For example, exemplary values include any value or range of values between the listed values (e.g., 1 g, 1.5 g, 2.0 g, 2.5 g, 3 g, 3.5 g, 4.0 g, etc.).

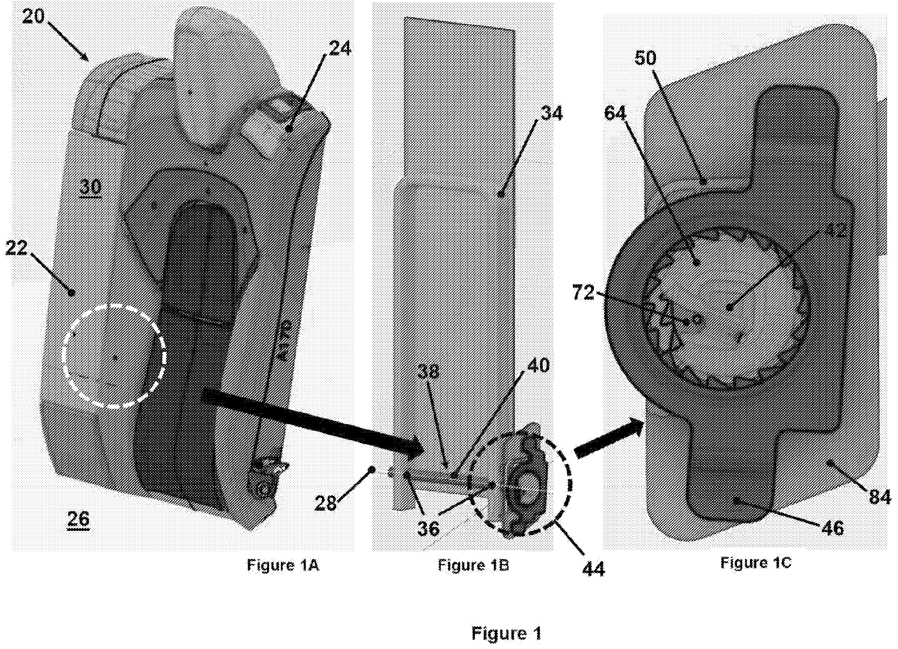

**Figure 1A** is an exemplary perspective view of an armrest 22 and left side seatback 24 of a vehicle seating assembly 20 that provides passenger safety. The vehicle seating assembly 20 can further include a right side seatback as well as left and right seats 26. For example, a typical vehicle seating assembly for a rear seat can include left and right passenger seats with the armrest 22 separating the left side seatback 24 from the right side seatback. The armrest 22 can be located between front seats, on a side of a front seat, between rear seats, and/or on a side of a rear seat.

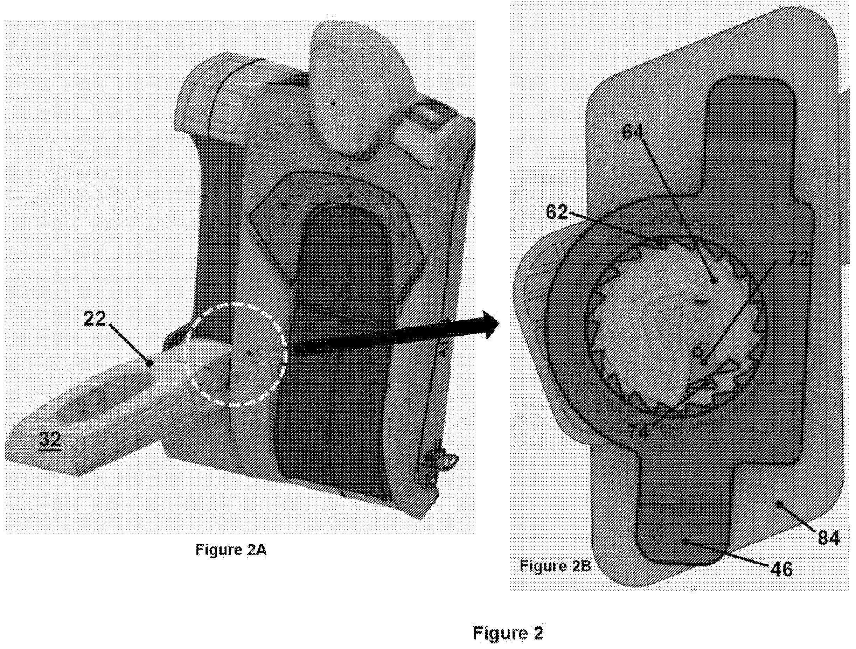

In certain embodiments, the armrest 22 can move between an up position 30 and a down position 32 (Figure 2A). In certain embodiments, the passengers move the armrest 22 between the up position and the down position. When in the down position, the armrest 22 as well as any controls or accessories carried by the armrest 22 (e.g., heating/cooling seating controls, entertainment controls, HVAC controls, cupholders, etc.) can be accessible to the passengers. When in the up position 30 in certain embodiments, a third seating position located between the left and right seatbacks becomes available for a third back seat passenger.

In certain embodiments, an angle of the seatback 24 relative to the seat 26 is user adjustable. In this way, the user is able to fine tune the seatback 24 angular position relative to the seat 26 to enhance user comfort.

**Figure 1B** is an exemplary illustration of portions of the armrest 22 from Figure 1A and shows an embodiment of an inertia latch 44 configured to inhibit unintended movement of the armrest 22 in the event of a collision to protect passengers. In certain embodiments, the armrest 22 rotates about an axis 28 between the up position 30 and the down position 32. In the illustrated embodiment, the axis 28 is defined by a longitudinal axis of a shaft 38. The shaft 38 rotationally couples the armrest 22 to the seatback 24. For example, in certain embodiments, the armrest 22 comprises a frame 34 which provides rigidity and structure to a pad or other soft structure of the armrest 22. In certain embodiments, the frame 34 is covered by the pad of the armrest 22. In certain embodiments, the frame 34 comprises one or more holes 36 sized and shaped to receive the shaft 38. In the illustrated embodiment, the one or more holes 36 are disposed near a base of the frame 34.

In certain embodiments, the shaft 38 comprises a body 40 and a head 42. In the illustrated embodiment, the body 40 is prevented from rotating relative to the frame 34. For example, in certain embodiments, the shaft 38 is fixed relative to the frame 34 so as to prevent relative rotation between the shaft 38 and the armrest 22.

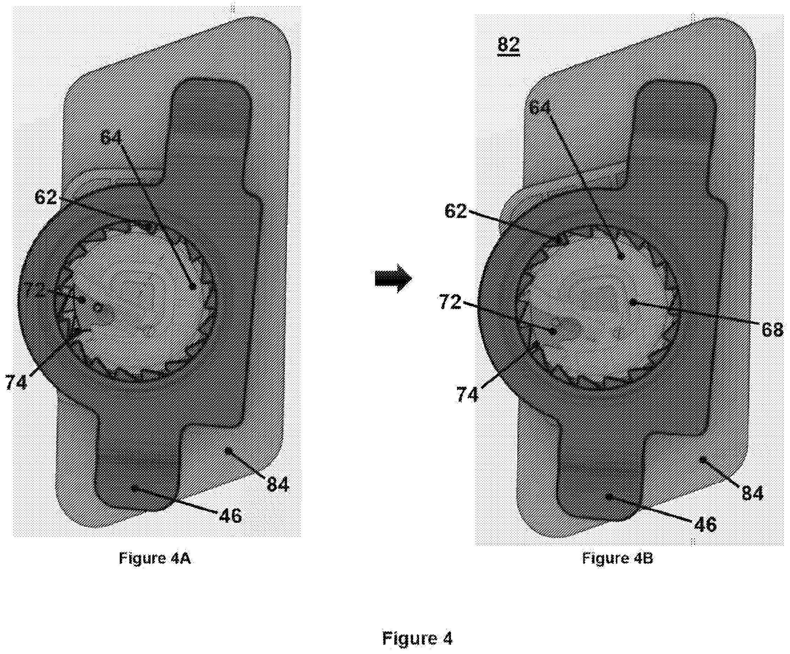

In certain embodiments, the head 42 of the shaft 38 is sized and shaped to engage with a boss 68 (Figure 4B) of the inertia latch 44 so as to prevent a spin plate 64 of the inertia latch 44 from rotating relative to the shaft 38. In certain embodiments, the boss 68 is carried by member 50. In certain embodiments, the member 50 rotates with the spin plate 64.

In certain embodiments, the spin plate 64 of the inertia latch 44 is locked to the shaft 38. In certain embodiments, a non-circular shape for both the head 42 and the boss 68 will prevent relative rotation. In the illustrated embodiment, the head 42 and the boss 68 have complementary square shapes. Of course other shapes are within the scope of this disclosure (e.g., square, triangular, etc.). In other embodiments, the shaft 38 is fixed to the spin plate 64 of the inertia latch 44 via welding, adhesives, fasteners, etc.

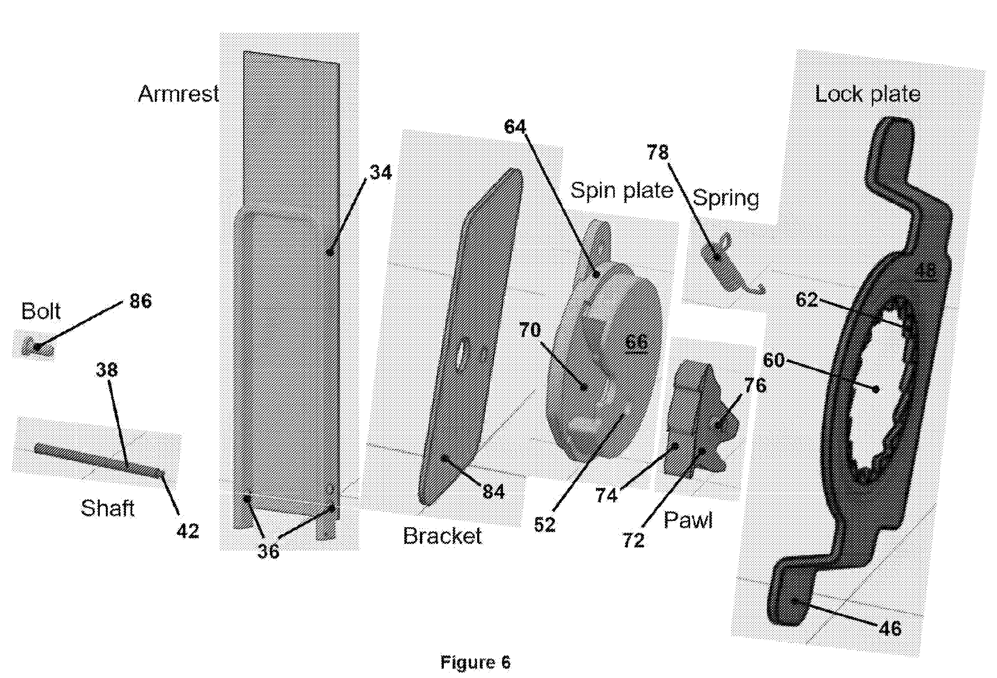

In certain embodiments, a base of the shaft 38 opposite from the head 42 can include a threaded hole sized and shaped to receive a bolt 86 (Figure 6). The bolt 86 can secure the shaft 38 to the seatback 24.

**Figure 1C** is a plan view of the inertia latch 44 from Figure 1B. In certain embodiments, the inertia latch 44 comprises a lock plate 46 and a spin plate 64. In certain embodiments, the lock plate 46 is fixed relative to the seat back 24. In certain embodiments, the lock plate 46 moves with the seatback 24 if the seatback 24 is folded forward and downward towards the seats 26. In certain embodiments, the lock plate 46 is fixed relative to the vehicle.

In certain embodiments, the lock plate 46 does not rotate when the armrest 22 rotates between the up position 30 and the down position 32. In certain embodiments, when the seatback 24 is locked in the upright position, the seatback 24 and the lock plate 46 are prevented from moving.

In certain embodiments, the spin plate 64 is fixed to the armrest 22. In certain embodiments, the spin plate 64 is fixed to the frame 34 of the armrest 22. In this way, the spin plate 64 rotates with the armrest 22 about the axis 28 when the armrest 22 is moved between the up position 30 and the down position 32.

The inertia latch 44 is activated because the spin plate 64 is sensitive to acceleration. For example, the pawl 72 of the spin plate 64 can lock to the lock plate 46 when the acceleration exceeds a predetermined threshold value (e.g., 2.5 g). In certain embodiments, the inertia latch 44 is not activated when acceleration is lower than the predetermined threshold value.

In certain embodiments, when the inertia latch 44 is not activated, the shaft 38, the frame 34 of the armrest 22, and the spin plate 64 of the inertia latch 44 rotate together when the armrest 22 moves between the up position 30 and the down position 32. In certain embodiments, when the inertia latch 44 is activated, the shaft 38, the frame 34 of the armrest 22, and the spin plate 64 of the inertia latch 44 are inhibited or prevented from rotating in at least one direction (i.e., clockwise, counterclockwise, or both directions) relative to the lock plate 46 of the inertia latch 44.

In certain embodiments, the lock plate 46 can include a body 48 having an opening 60. In the illustrated embodiment, a wall or surface defined by the opening 60 can comprises one or more teeth 62 (Figure 6). In certain embodiments, the opening 60 in the lock plate 46 functions as a gear. In this way, the one or more teeth 62 are sized and shaped to engage with the pawl 72 of the inertia latch 44 when the pawl 72 is in the engaged position 82. In Figure 1C, the pawl 72 of the inertia latch 44 is in a disengaged position 80 relative to the one or more teeth 62 in the opening 60.

In certain embodiments, the spin plate 64 can include a body 66 (Figure 6). In certain embodiments, the body 66 is coupled to the shaft 38 so as to rotate together with the shaft 38. In the illustrated embodiment, the body 66 includes a channel 70 sized and shaped to receive at least a portion of the pawl 72. The pawl 72 and the spin plate 64 can interface with each other using matching surfaces. For example, the pawl 72 can slide along the channel 70 between the engaged position 82 and the disengaged position 80. In certain embodiments, the pawl 72 comprises one or more teeth 74 configured to engage with the one or more teeth 62 of the lock plate 46 when the pawl 72 is in the engaged position 82.

In certain embodiments, the pawl 72 can comprise more than one tooth 74 to reduce a degree of rebound or movement of the armrest 22 once the inertia latch 44 is activated. For example, additional teeth 74 can reduce the time until the inertia latch 44 is fully locked. Additional teeth 74 can also increase the reliability of the inertia latch 44 by distributing the torque caused by rotation of the armrest 22 across more than one tooth 74.

In certain embodiments, the pawl 72 comprises a post 76. In certain embodiments, the post 76 is configured to secure a biasing member 78. In certain embodiments, the biasing member 78 applies a biasing force to the pawl 72. In the illustrated embodiment, the biasing member 78 is configured as a coil spring. The spring applies tension between the pawl 72 and the spin plate 64. For example, the spring can have a first end and a second end. The first end can couple to the post 76 on the pawl 72 and the second end can couple to an aperture 52 in the spin plate 64.

In certain embodiments, one or more characteristics (e.g., length, spring constant (k), etc.) of the biasing member 78 and/or one or more characteristics (e.g., mass, material, shape, etc..) of the pawl 72 can be varied. For example, in certain embodiments, characteristics of the biasing member 78 and/or the pawl 72 are selected so that the pawl 72 stays in the disengaged position 80 until a magnitude of a change in velocity of the spin plate 64 causes inertia of the pawl 72 to overcome the biasing force and move to the engaged position 82. In certain embodiments, the biasing force can determine an actuation profile that controls positioning of the pawl 72 relative to the spin plate 64 when experiencing acceleration. For example, the one or more characteristics of the coil spring can be selected to ensure the pawl 72 is in the engaged position 82 when the acceleration exceeds a predetermined threshold value (e.g., 2.5 g). Of course the predetermined threshold is not limited to 2.5 g and can be any other value as well as any value or range of values between the listed values (e.g., 1 g, 1.5 g, 2.0 g, 2.5 g, 3 g, 3.5 g, 4.0 g, etc.).

The shapes of the one or more teeth 62 on the lock plate 46 and the one or more teeth 74 on the pawl 72 can be selected to inhibit or prevent the armrest 22 from rotating in at least one direction (i.e., clockwise, counterclockwise, or both directions) relative to the lock plate 46 of the inertia latch 44. In certain embodiments, the one or more teeth 62 on the lock plate 46 and the one or more teeth 74 on the pawl 72 are asymmetric to limit motion to a single direction.

**Figure 2A** is similar to Figure 1A except the armrest 22 is in the down position 32. **Figure 2B** is a plan view of the inertia latch 44 from Figure 2A and shows the pawl 72 still in the disengaged position 80 when the armrest 22 is in the down position 32. In certain embodiments, characteristics of the biasing member 78 and/or the pawl 72 are selected so that the pawl 72 stays in the disengaged position 80 when the spin plate 64 is rotated so that the channel 70 faces in a downward direction and the armrest 22 is in the down position 32.

In certain embodiments, the inertia latch 44 comprises a bracket 84. In the illustrated embodiment, the bracket 84 is disposed between the spin plate 64 and the frame 34. In the illustrated embodiment, the bracket 84 does not rotate when the armrest 22 moves between the up position 30 and the down position 32.

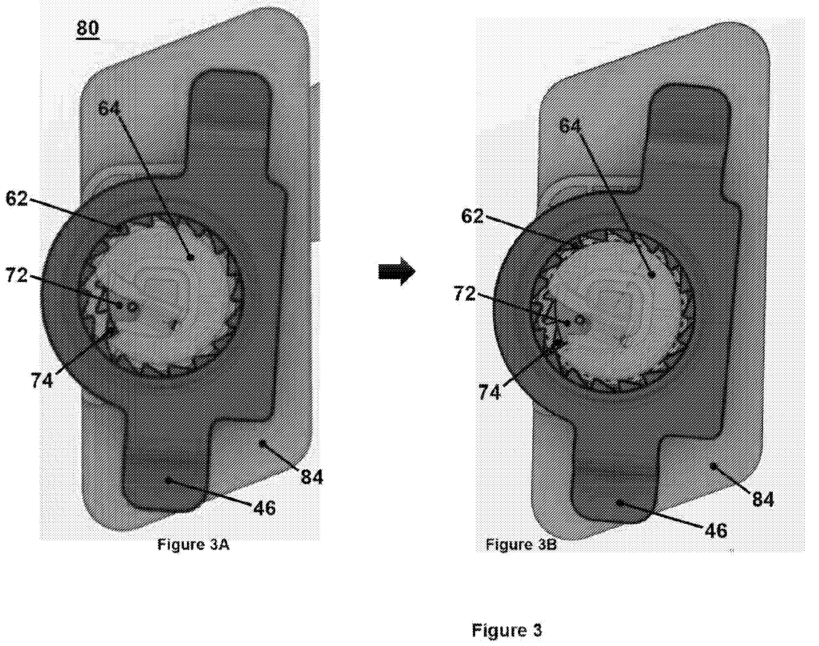

**Figure 3A** is a plan view of the inertia latch 44 from Figure 1B at a time before the inertia latch 44 experiences a change in velocity that is sufficient to cause the pawl 72 to move towards the engaged position 82. The pawl 72 maintains its position in the disengaged position 80 with its one or more teeth 74 disengaged from the one or more teeth 62 of the lock plate 46. The armrest 22 is in the up position in Figure 3A.

**Figure 3B** is a plan view similar to Figure 3A except the inertia latch 44 is experiencing a change in velocity that is sufficient to cause the pawl 72 to begin moving towards the engaged position 82. In this way, the inertia of the pawl 72 to separate from the body 66 of the spin plate 64 causes the pawl 72 to slide along the channel 70 of the body 66 towards the lock plate 46.

**Figure 4A** is a plan view similar to Figure 3B except the change in velocity being experienced by the inertia latch 44 has sufficiently increased to cause the inertia of the pawl 72 to overcome the biasing force and further slide along the channel 70 of the body 66 towards the lock plate 46. In the illustrated embodiment, the pawl 72 has slid along the channel 70 until the one or more teeth 74 of the pawl 72 contact and partially engage the one or more teeth 62 of the lock plate 46. The relative mis clocking between the one or more teeth 74 of the pawl 72 and the one or more teeth 62 of the lock plate 46 inhibit the one or more teeth 74 of the pawl 72 from initially fully engaging the one or more teeth 62 of the lock plate 46 in the absence of relative slight rotation between the pawl 72 and the lock plate 46. Of course depending on, for example, the pitches of the one or more teeth 74 of the pawl 72 and the one or more teeth 62 of the lock plate 46 the degree of engagement between the one or more teeth 62, 74 will vary in the absence of relative slight rotation between the pawl 72 and the lock plate 46. The armrest 22 is still in the up position in Figure 4A.

**Figure 4B** is a plan view similar to Figure 4A except the spin plate 64 and the armrest 22 have rotated slightly in a counter-clockwise direction towards the down position 32 to allow the one or more teeth 74 of the pawl 72 and the one or more teeth 62 of the lock plate 46 to fully engage. In Figure 4B, the armrest 22 has moved slightly towards the down position 32 before achieving full engagement. The engagement inhibits further movement of the armrest 22 towards the down position 32. In other embodiments, the one or more teeth 74 of the pawl 72 and the one or more teeth 62 of the lock plate 46 achieve full engagement without the need for relative rotation between the pawl 72 and the lock plate 46.

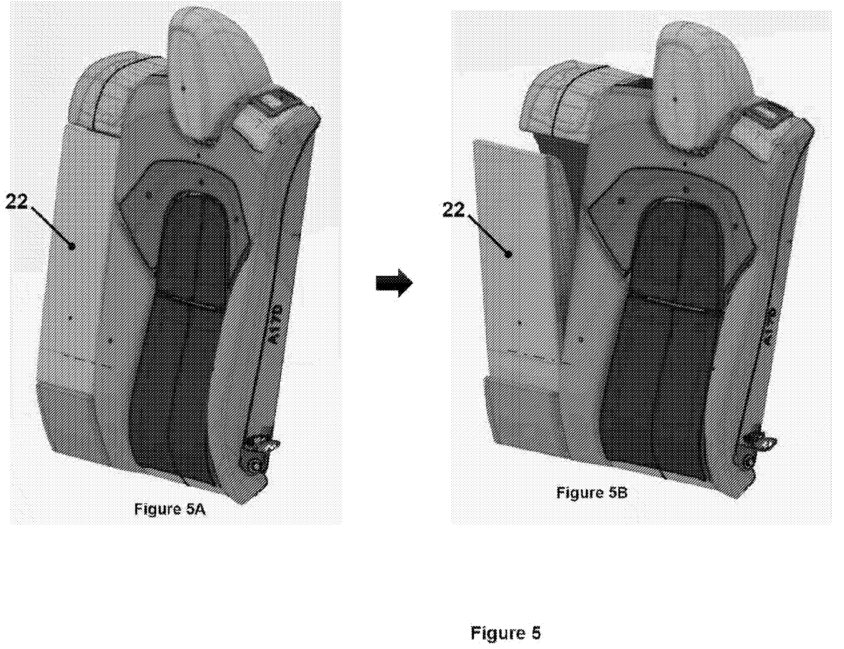

**Figure 5A** is similar to Figure 1A and shows an interim position of the armrest 22 after the armrest 22 has initially moved to or started in the up position 30 before slightly rebounding in a direction towards the down position 32. For example, in certain embodiments, when the inertia latch 44 is activated, the armrest 22 is only able to rotate towards the up position 30. Once in the up position 30 and locked to the lock plate 46, the armrest 22 is inhibited or prevented from rotating towards the down position 32.

**Figure 5B** shows a final position of the armrest 22 after slightly rebounding in the direction towards the down position 32 as illustrated by the change in positions of the inertia latch 44 from Figure 4A to Figure 4B. The armrest 22 is locked and prevented from unintended rapid rotation towards the down position 32 enhancing passenger safety.

**Figure 6** is an exploded view of the armrest 24 and inertia latch 44 from Figure 1B. In certain embodiments, the inertia latch 44 comprises the lock plate 46 and the spin plate 64. The spin plate 64 of the inertia latch 44 rotates with the armrest 22. In certain embodiments, the lock plate 46 of the inertia latch 44 does not rotate with armrest 22. In certain embodiments, an outer circumference of the body 66 of the spin plate 64 is sized and shaped to at least partially fit within the opening 60 in the lock plate 46. In this way, the spin plate 64 can rotate within the opening 60 when the armrest 22 is moved between the up position 30 and the down position 32.

In certain embodiments, the lock plate 46 can include the body 48 having the opening 60. In the illustrated embodiment, a wall or surface defined by the opening 60 can comprises the one or more teeth 62. In certain embodiments, the opening 60 in the lock plate 46 functions as a gear. In this way, the one or more teeth 62 are sized and shaped to engage with the pawl 72 of the inertia latch 44 when the pawl 72 is in the engaged position 82.

In certain embodiments, the spin plate 64 can include the body 66. In certain embodiments, the body 66 is coupled to the shaft 38 so as to rotate with the shaft 38. In the illustrated embodiment, the body 66 includes the channel 70 sized and shaped to receive at least a portion of the pawl 72. The pawl 72 and the spin plate 64 can interface with each other using matching surfaces. For example, the pawl 72 can slide along the channel 70 between the engaged position 82 and the disengaged position 80. In certain embodiments, the pawl 72 comprises the one or more teeth 74 configured to engage with the one or more teeth 62 of the lock plate 46 when the pawl 72 is in the engaged position 82.

In certain embodiments, the pawl 72 comprises the post 76. In certain embodiments, the post 76 is configured to secure the biasing member 78. The biasing member 78 applies a biasing force to the pawl 72. In the illustrated embodiment, the biasing member 78 is configured as a coil spring which applies tension between the pawl 72 and the spin plate 64. For example, the spring can have a first end and a second end. The first end couples to the post 76 on the pawl 72 and the second end couples to an aperture 52 in the spin plate 64.

In certain embodiments, the inertia latch 44 comprises the bracket 84. In the illustrated embodiment, the bracket 84 is disposed between the spin plate 64 and the frame 34. In the illustrated embodiment, the bracket 84 does not rotate when the armrest 22 moves between the up position 30 and the down position 32.

In certain embodiments, the armrest 22 comprises the frame 34. In certain embodiments, the frame 34 comprises the one or more holes 36 sized and shaped to receive the shaft 38. In the illustrated embodiment, the one or more holes 36 are disposed near a base of the frame 34.

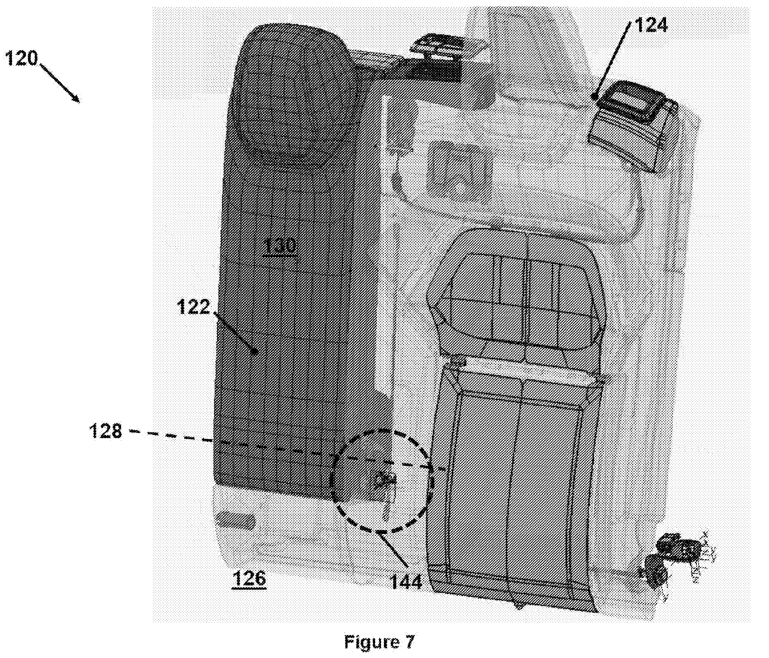

**Figure 7** is an exemplary perspective view of another embodiment of an armrest 122 and left side seatback 124 of a vehicle seating assembly 120 that includes an inertia latch 144 which provides passenger safety.

The vehicle seating assembly 120 can further include a right side seatback as well as left and right seats 126. For example, a typical vehicle seating assembly for a rear seat can include left and right passenger seats with the armrest 122 separating the left side seatback from the right side seatback. In certain embodiments, the armrest 122 can move between an up position 130 and a down position. In certain embodiments, the passengers move the armrest 122 between the up position 130 and the down position. When in the down position, the armrest 122 as well as any controls or accessories carried by the armrest 122 (e.g., heating/cooling seating controls, entertainment controls, HVAC controls, cupholders, etc.) can be accessible to the passengers. When in the up position 130 in certain embodiments, a third seating position located between the left and right seatbacks becomes available for a third back seat passenger.

In certain embodiments, an angle of the seatback 124 relative to the seat 126 is user adjustable. In this way, the user is able to fine tune the seatback 124 angular position relative to the seat 126 to enhance user comfort.

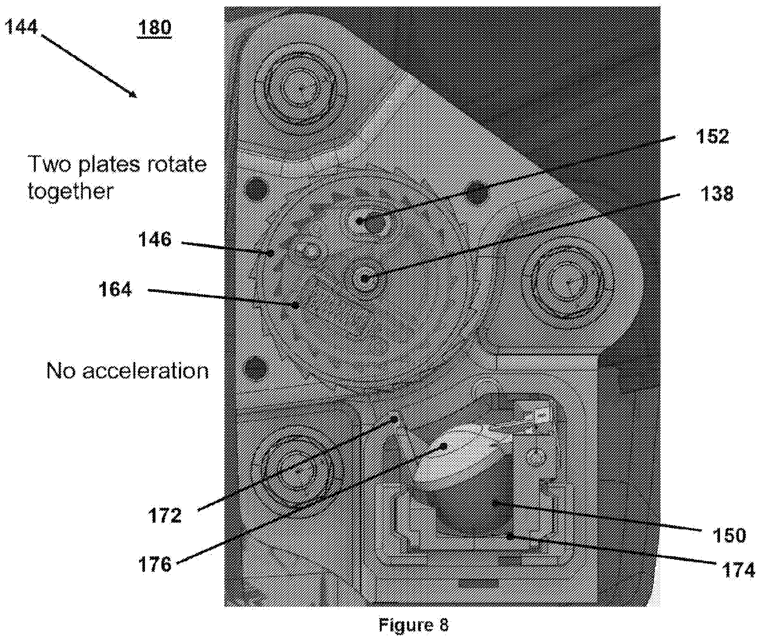

An inertia latch 144 is configured to inhibit unintended movement of the armrest 122 in the event of a collision to protect passengers. In certain embodiments, the armrest 122 rotates about an axis 128 between the up position 130 and the down position. In the illustrated embodiment, the axis 128 is defined by a longitudinal axis of a shaft 138 (Figure 8).

**Figure 8** is a plan view of the inertia latch 144 from Figure 7. In the case of a fold-out armrest which is integrated into the rear seat bench of a motor vehicle, the inertia latch 144 overcomes the tendency of the armrest 122 to fold in or out in proximity of the passengers in the event of an accident (e.g., head-on collision, rear-end collision). The safety of the passengers is enhanced by the inertia latch 144 locking rotation of the armrest 122 and preventing unintended rapid rotation of the armrest 122. In certain embodiments, when the inertia latch 144 is activated the armrest 122 is only able to rotates towards the up position 130. Once in the up position 130, the armrest 122 is inhibited from rotating towards the down position.

In certain embodiments, the inertia latch 144 comprises a ball 150 and a finger 172 which activate in response to a change in velocity of the vehicle. The inertia latch 144 is activated because the ball 150 is sensitive to acceleration (i.e., change in velocity). For example, the ball 150 can cause the finger 172 to lock rotation of a lock plate 146 when the acceleration exceeds a predetermined threshold value (e.g., 2.5 g).

In certain embodiments when not activated, the ball 150 rests in a receptacle 174 and under a hat 176. In this non-activated position, the finger 172 does not engage with the lock plate 146. In certain embodiments, the hat 176 is disposed relative to the ball 150 so that sufficient movement of the ball 150 in any one of multiple directions can lift the hat 176 causing the finger 172 to engage the lock plate 146. In certain embodiments, the receptacle 174 has a concave or cup shape.

The inertia latch 144 is not activated when acceleration is lower than the predetermined threshold value. When not activated as is illustrated in Figure 8, the ball 150 does not lift the finger 172 to cause the finger 172 to engage with the lock plate 146 of the inertia latch 144. When the finger 172 is not engaged with the lock plate 146, the lock plate 146 is free to rotate with the spin plate 164 and the armrest 122 as the armrest 122 moves between the up position 130 and the down position.

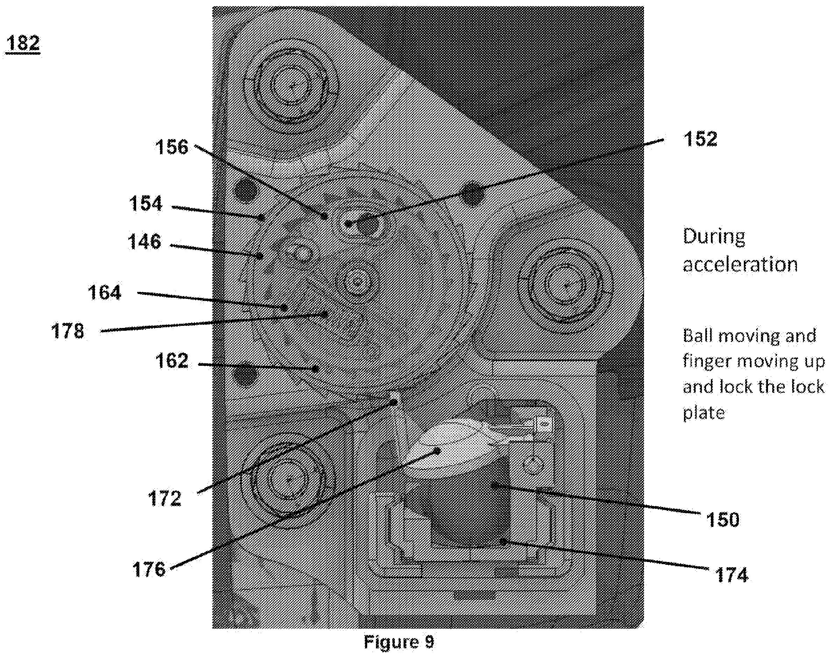

**Figure 9** is similar to Figure 8 except the inertia latch 144 has activated causing the finger 172 to engage the lock plate 146 and prevent further rotation of the lock plate 146 in at least one direction. Once the lock plate 146 is prevented from rotating, further rotation of the armrest 122 will cause the spin plate 164 to rotate relative to the lock plate 146. This movement of the spin plate 164 relative to the lock plate 146 causes a pawl 152 to then lock the spin plate 164 relative to the lock plate 146. Once locked together, the lock plate 146 prevents the spin plate 164 and the armrest 122 from further rotation.

In certain embodiments when activated, the ball 150 changes position within the receptacle so as to lift the hat 176 causing the finger 172 to engage the lock plate 146.

In certain embodiments, one or more characteristics (e.g., mass, material, shape, etc.) of the ball 150 can be varied. For example, in certain embodiments, characteristics of the ball 150 are selected so that the ball 150 does not activate the inertia latch 144 until a magnitude of a change in velocity of the receptacle 174 and the hat 176 causes inertia of the ball 150 to lift the hat 176. For example, the one or more characteristics of the ball 150 can be selected to ensure the finger 172 is in the engaged position 182 when the acceleration exceeds a predetermined threshold value (e.g., 2.5 g). Of course the predetermined threshold is not limited to 2.5 g and can be any other value as well as any value or range of values between the listed values (e.g., 1 g, 1.5 g, 2.0 g, 2.5 g, 3 g, 3.5 g, 4.0 g, etc.).

The shapes of the teeth 154, 156, 162 on the lock plate 146 and on the pawl 152 can be selected to inhibit or prevent the armrest 122 from rotating in at least one direction (i.e., clockwise, counterclockwise, or both directions) relative to the lock plate 146 of the inertia latch 144. In certain embodiments, the one or more teeth 154, 162 on the lock plate 146 and the one or more teeth 156 on the pawl 152 are asymmetric to limit motion to a single direction.

In certain embodiments, the spin plate 164 rotates with the armrest 122 when the armrest 122 rotates between the up position 130 and the down position. In certain embodiments, the spin plate 164 is fixed to the armrest 122. In this way, the spin plate 164 rotates with the armrest 122 about the axis 128 when the armrest 122 is moved between the up position 130 and the down position. In certain embodiments, the lock plate 146 can rotate with the spin plate 164 when the inertia latch 144 is not activated but is prevented from rotating with the spin plate 164 when the inertia latch 144 is activated.

In certain embodiments, the inertia latch 144 comprise a biasing member 178 (e.g., spring). In certain embodiments, the biasing member 178 is configured to bias the lock plate 146 relative to the spin plate 164.

In certain embodiments, the inertia latch 144 is activated because of the sensitivity of the ball 150 to acceleration. For example, the ball 150 can lock the finger 172 to the lock plate 146 when the acceleration exceeds the predetermined threshold value (e.g., 2.5 g). In certain embodiments, the inertia latch 144 is not activated when acceleration is lower than the predetermined threshold value.

In certain embodiments, when the inertia latch 144 is not activated, the armrest 122, the spin plate 164, and the lock plate 146 of the inertia latch 144 rotate together when the armrest 122 moves between the up position 130 and the down position. In certain embodiments, when the inertia latch 144 is activated, the armrest 122 and the spin plate 164 of the inertia latch 144 are inhibited or prevented from rotating in at least one direction (i.e., clockwise, counterclockwise, or both directions) relative to the lock plate 146 of the inertia latch 144.

In certain embodiments, the lock plate 146 can include one or more outer teeth 154 and one or more inner teeth 162. In certain embodiments, the one or more outer teeth 154 and the one or more inner teeth 162 are concentric. In certain embodiments, the one or more outer teeth 154 and the one or more inner teeth 162 have different pitch. In certain embodiments, the one or more outer teeth 154 and the one or more inner teeth 162 have the same pitch. In certain embodiments, the one or more outer teeth 154 and/or the one or more inner teeth 162 are asymmetric. In certain embodiments, the one or more outer teeth 154 and/or the one or more inner teeth 162 are symmetric. In the illustrated embodiments, the one or more outer teeth 154 and the one or more inner teeth 162 are asymmetric.

The one or more outer teeth 154 can be disposed so as to engage with the finger 172 when the inertia latch 144 is activated. In this way, the one or more outer teeth 154 are sized and shaped to be engaged by the finger 172 of the inertia latch 144 when the finger 172 is in the engaged position 182. In Figure 9, the finger 172 of the inertia latch 144 is in the engaged position 182 relative to the one or more outer teeth 154 of the lock plate 146.

In certain embodiments, an inner wall or surface of the lock plate 146 can comprise the one or more inner teeth 162. In certain embodiments, the pawl 152 comprises one or more teeth 156. In certain embodiments, the one or more teeth 156 of the pawl 152 engage with the one or more inner teeth 162 when the lock plate 146 is prevented from rotating with the spin plate 164 and the armrest 122 slightly moves towards the down position. In this way, the one or more inner teeth 162 are sized and shaped to engage with the one or more teeth 156 of the pawl 152.

In certain embodiments, at least a portion of the pawl 152 is carried between the spin plate 164 and the lock plate 146. In certain embodiments, the pawl 152 is movably coupled to both the spin plate 164 and the lock plate 146. For example, in the illustrated embodiment of Figure 9, the one or more teeth 156 of the pawl 152 begin moving in a direction towards the one or more inner teeth 162 of the lock plate 146 after the lock plate 146 is prevented from rotating with the spin plate 164. In contrast, the one or more teeth 156 of the pawl 152 stay in a retracted or disengaged position (Figure 8) relative to the one or more inner teeth 162 of the lock plate 146 when the lock plate 146 is allowed to rotate with the spin plate 164.

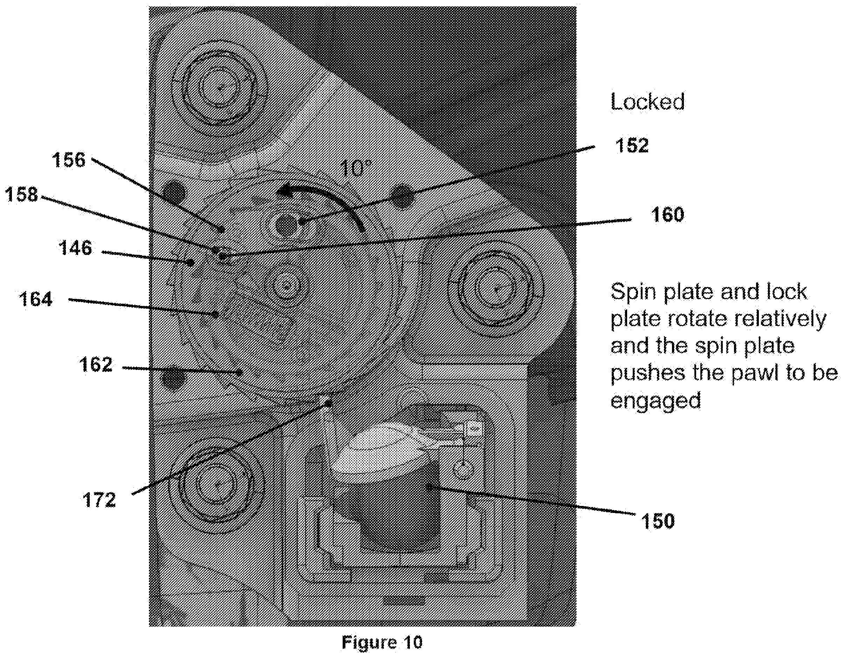

**Figure 10** is similar to Figure 9 except the spin plate 164 and the armrest 144 have rotated slightly in a counter-clockwise direction towards the down position to cause the spin plate 164 to push at least one tooth 156 on the pawl 152 to tightly engage with at least one of the inner teeth 162 on the lock plate 146 inhibiting further movement of the armrest 144 towards the down position. In certain embodiments, the lock plate 146 comprises one or more openings 158 configured to receive one or more posts 160 of the pawl 152. In certain embodiments, the one or more posts 160 slide within the one or more openings 158 when the pawl 152 moves between the retracted or disengaged position (Figures 8 and 9) and the extended or engaged position (Figure 10).

In the illustrated embodiment, the armrest 144 rebounded 10 degrees towards the down position. However, the disclosure is not so limited. In certain embodiments, the pawl 152 and/or lock plate 146 can comprise teeth with a pitch selected to reduce the degree of rebound or movement of the armrest 122 once the inertia latch 144 is activated. For example, additional teeth can reduce the time until the inertia latch 144 is fully locked. Additional teeth can also increase the reliability of the inertia latch 144 by distributing the torque caused by rotation of the armrest 122 across more than one tooth.

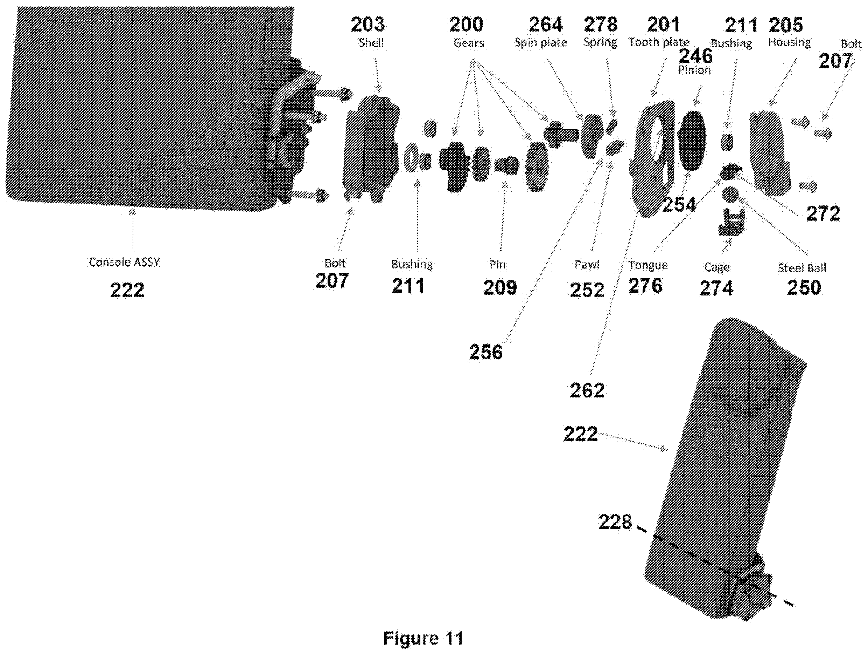

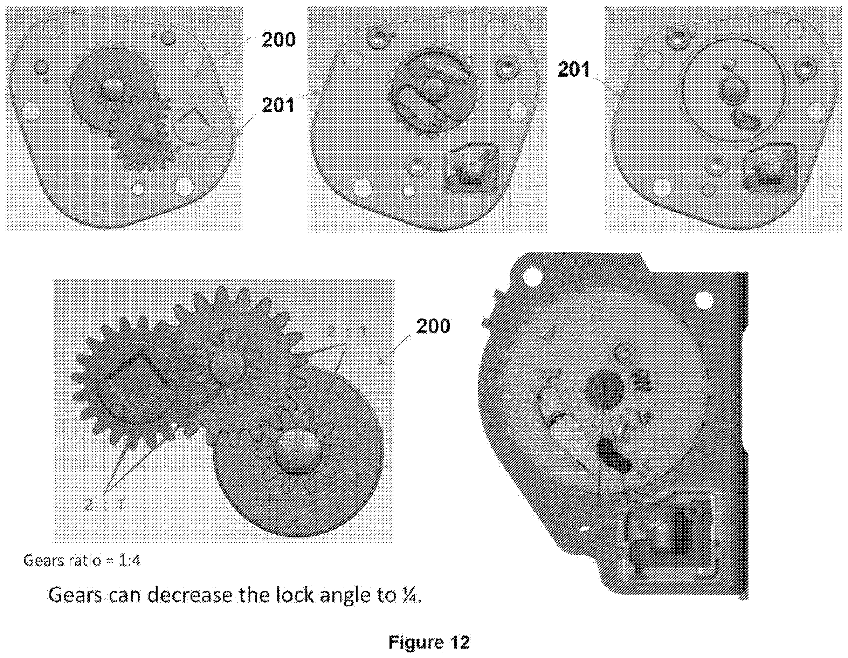

**Figure 11** is an exploded view of an armrest 222 and inertia latch 244 that is similar to what is illustrated in Figure 7 except the inertia latch 244 in Figure 11 includes one or more gears 200. **Figure 12** includes views of the one or more gears 200 and of the inertia latch 244 from Figure 11 in an assembled state. The inertia latch 244 is configured to inhibit unintended movement of the armrest 222 in the event of a collision to protect passengers. In certain embodiments, the armrest 222 rotates about an axis 228 between the up position and the down position. When in the down position, the armrest 222 as well as any controls or accessories carried by the armrest 222 (e.g., heating/cooling seating controls, entertainment controls, HVAC controls, cupholders, etc.) can be accessible to the passengers. When in the up position in certain embodiments, a third seating position located between the left and right seatbacks becomes available for a third back seat passenger.

The inertia latch 244 is configured to inhibit unintended movement of the armrest 222 in the event of a collision to protect passengers. In certain embodiments, the armrest 222 rotates about an axis 228 between the up position and the down position. In the case of a fold-out armrest which is integrated into the rear seat bench of a motor vehicle, the inertia latch 244 overcomes the tendency of the armrest 222 to fold in or out in proximity of the passengers in the event of an accident (e.g., head-on collision, rear-end collision). The safety of the passengers is enhanced by the inertia latch 244 locking rotation of the armrest 222 and preventing unintended rapid rotation of the armrest 222. In certain embodiments, when the inertia latch 244 is activated the armrest 222 is only able to rotates towards the up position. Once in the up position, the armrest 222 is inhibited from rotating towards the down position.

In certain embodiments, the inertia latch 244 comprises a ball 250 and a finger 272 which activate in response to a change in velocity of the vehicle. The inertia latch 244 is activated because the ball 250 is sensitive to acceleration (i.e., change in velocity). For example, the ball 250 can cause the finger 272 to lock rotation of a lock plate or pinion 246 when the acceleration exceeds a predetermined threshold value (e.g., 2.5 g).

In certain embodiments when not activated, the ball 250 rests in a receptacle or cage 274 and under a hat or tongue 276. In this non-activated position, the finger 272 does not engage with the lock plate or pinion 246. In certain embodiments, the hat 276 is disposed relative to the ball 250 so that sufficient movement of the ball 250 in any one of multiple directions can lift the hat or tongue 276 causing the finger 272 to engage the lock plate or pinion 246. In certain embodiments, the receptacle 274 has a concave or cup shape.

The inertia latch 244 is not activated when acceleration is lower than the predetermined threshold value. When not activated, the ball 250 does not lift the finger 272 to cause the finger 272 to engage with the lock plate or pinion 246 of the inertia latch 244. When the finger 272 is not engaged with the lock plate or pinion 246, the lock plate or pinion 246 is free to rotate.

Once the lock plate or pinion 246 is prevented from rotating, further rotation of the armrest 222 will cause the pawl 252 to then lock the spin plate 264 relative to a tooth plate 201. Once locked together, the tooth plate 201 prevents the spin plate 264 and the armrest 222 from further rotation.

The embodiment illustrated in Figure 11 comprises the one or more gears 200. In the illustrated embodiment, the one or more gears 200 comprises four gears and a pin 209. Of course, the one or more gears 200 can comprises fewer or more than four gears and one pin 209 as well as any combination of types of gears 200 and pins 209 as known to a person having ordinary skill in the art. In certain embodiments, the inertia latch 244 further comprises one or more bushings 211. An example of gear ratio for the gears 200 is 1:4. Of course, the disclosure is not limited to a gear ration of 1:4 and can instead having any other gear ratio.

In certain embodiments, the inertia latch 244 further comprises a shell 203 and a housing 205. In certain embodiments, one or more fasteners 207 secure the housing 205 to the shell 203.

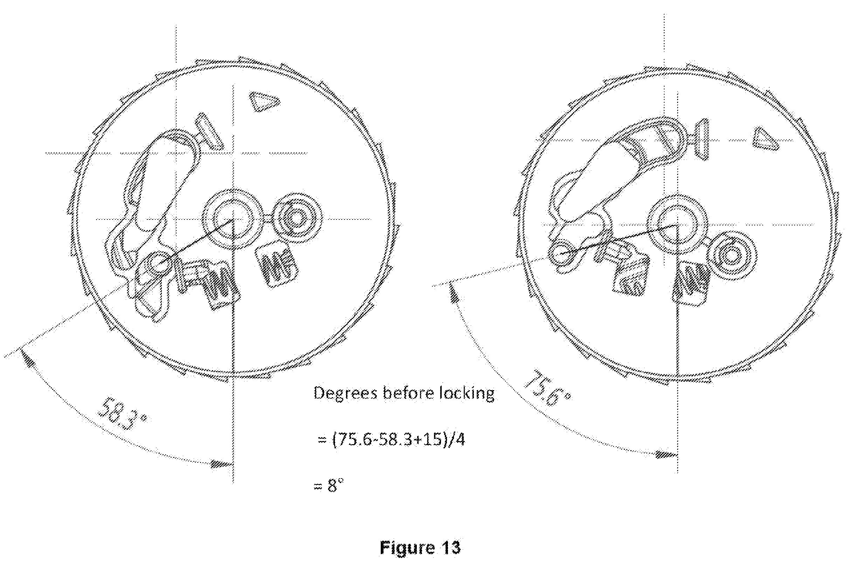

**Figure 13** illustrates an example of an amount of rotation before the inertia latch is locked. In the illustrated example, the armrest 222 rotates eight degrees before locking. Without the gears 200, in certain embodiments, the armrest 222 rotates thirty-two degrees before locking. In this way, the one or more gears 200 can reduce an amount of rotation of the armrest 222 that occurs after the lock plate or pinion 246 is prevented from rotating. In certain embodiments, the one or more gears 200 decrease a lock angle to ¼ of the lock angle for the embodiment illustrated in Figure 7. Of course, the disclosure is not limited to achieving a decrease in lock angle to ¼ and can instead achieve any other decrease in the amount of lock angle.

In certain embodiments when activated, the ball 250 changes position within the receptacle 274 so as to lift the hat 276 causing the finger 272 to engage the lock plate or pinion 246.

In certain embodiments, one or more characteristics (e.g., mass, material, shape, etc.) of the ball 250 can be varied. For example, in certain embodiments, characteristics of the ball 250 are selected so that the ball 250 does not activate the inertia latch 244 until a magnitude of a change in velocity of the receptacle 274 and the hat 276 causes inertia of the ball 250 to lift the hat 276. For example, the one or more characteristics of the ball 250 can be selected to ensure the finger 272 is in the engaged position when the acceleration exceeds a predetermined threshold value (e.g., 2.5 g). Of course the predetermined threshold is not limited to 2.5 g and can be any other value as well as any value or range of values between the listed values (e.g., 1 g, 1.5 g, 2.0 g, 2.5 g, 3 g, 3.5 g, 4.0 g, etc.).

The shapes of teeth 254, 256, 262 on the lock plate or pinion 246, the pawl 252, and the tooth plate 201, respectively, can be selected to inhibit or prevent the armrest 222 from rotating in at least one direction (i.e., clockwise, counterclockwise, or both directions) relative to the tooth plate 201 of the inertia latch 244.

In certain embodiments, the spin plate 264 rotates with the armrest 222 when the armrest 222 rotates between the up position and the down position. In certain embodiments, the spin plate 264 is coupled to the armrest via the one or more gears 200. In certain embodiments, a gearing (e.g., 1:8, 1:4, 1:2, etc. ) for the one or more gears 200 is selected to increase rotational sensitivity of the spin plate 264 relative to the armrest 222. In this way, a small angular rotation of the armrest 222 causes a greater angular rotation of the spin plate 264. This greater angular rotation results in a decrease in a lock angle relative to the lock angle for the embodiment illustrated in Figure 7.

The spin plate 264 rotates with the armrest 222 but at a greater rate of angular rotation than the armrest 222 via the one or more gears 200. In certain embodiments, the lock plate or pinion 246 can rotate with the spin plate 264 when the inertia latch 244 is not activated but is prevented from rotating with the spin plate 264 when the inertia latch 244 is activated. In certain embodiments, the inertia latch 244 comprise a biasing member 278 (e.g., spring).

In certain embodiments, the inertia latch 244 is activated because of the sensitivity of the ball 250 to acceleration. For example, the ball 250 can lock the finger 272 to the lock plate or pinion 246 when the acceleration exceeds the predetermined threshold value (e.g., 2.5 g). In certain embodiments, the inertia latch 244 is not activated when acceleration is lower than the predetermined threshold value.

In certain embodiments, the lock plate or pinion 246 can include one or more outer teeth 254. In certain embodiments, the tooth plate 201 can include one or more inner teeth 262. In certain embodiments, the one or more outer teeth 254 and the one or more inner teeth 262 are concentric. In certain embodiments, the one or more outer teeth 254 and the one or more inner teeth 262 have different pitch. In certain embodiments, the one or more outer teeth 254 and the one or more inner teeth 262 have the same pitch. In certain embodiments, the one or more outer teeth 254 and/or the one or more inner teeth 262 are asymmetric. In certain embodiments, the one or more outer teeth 254 and/or the one or more inner teeth 262 are symmetric. In the illustrated embodiments, the one or more outer teeth 254 and the one or more inner teeth 262 are asymmetric.

The one or more outer teeth 254 can be disposed so as to engage with the finger 272 when the inertia latch 244 is activated. In this way, the one or more outer teeth 254 are sized and shaped to be engaged by the finger 272 of the inertia latch 244 when the finger 272 is in the engaged position.

In certain embodiments, an inner wall or surface of the tooth plate 201 can comprise the one or more inner teeth 262. In certain embodiments, the pawl 252 comprises one or more teeth 256. In certain embodiments, the one or more teeth 256 of the pawl 252 engage with the one or more inner teeth 262 when the lock plate or pinion 246 is prevented from rotating and the armrest 222 slightly moves towards the down position. In this way, the one or more inner teeth 262 are sized and shaped to engage with the one or more teeth 256 of the pawl 252.

In certain embodiments, at least a portion of the pawl 252 is carried between the spin plate 264 and the tooth plate 201. In certain embodiments, the pawl 252 is movably coupled to both the spin plate 264 and the tooth plate 201.

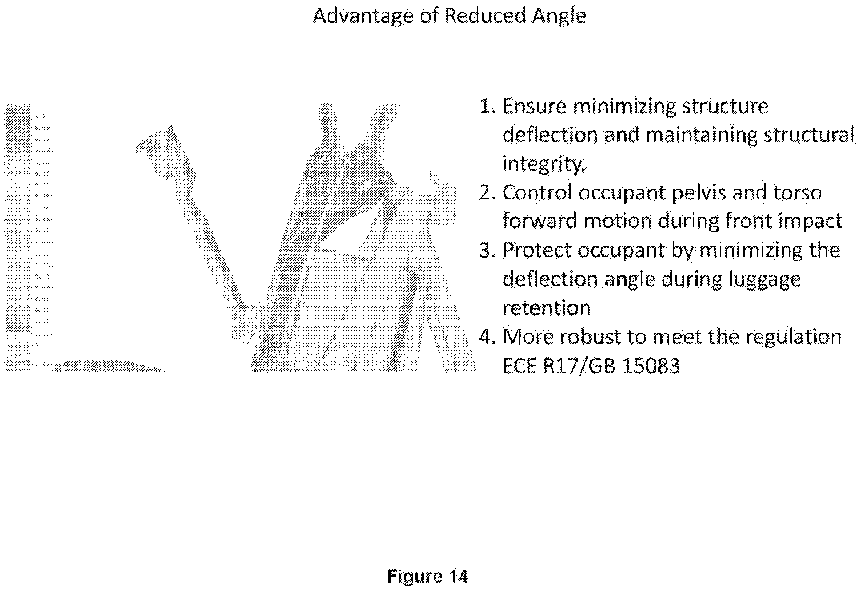

**Figure 14** illustrates advantages of the inertia latch of Figure 11. Advantages can include one or more of minimizing structure deflection and maintaining structural integrity, controlling occupant pelvis and torso forward motion during front impact, protecting occupant by minimizing the deflection angle during luggage retention, and a more robust design meeting the regulation (e.g., Seat Back Strength Standards (ECE R17/GB 15083)).

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed glove box actuation assembly. It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.
Below follow a list of numbered items. These items may be combined with any other features described herein in any combination beyond those expressly stated below:
1. A vehicle seating assembly comprising:
   an armrest configured to rotate about an axis and between an up position and a down position;
   a lock plate;
   a spin plate configured to rotate with the armrest about the axis and having a channel; and
   a pawl disposed relative to the channel so as to move between a disengaged position and an engaged position, the pawl being biased to move towards the disengaged position by a biasing force, the pawl being disengaged from the lock plate when the pawl is in the disengaged position so as to allow the armrest to move between the up position and the down position, and the pawl engaging with the lock plate when the pawl is in the engaged position so as to inhibit movement of the armrest towards at least the down position.
2. The vehicle seating assembly of Item 1, wherein the pawl is configured to move from the disengaged position to the engaged position when a magnitude of a change in velocity of the spin plate causes inertia of the pawl to overcome the biasing force.
3. The vehicle seating assembly of Item 1, wherein the armrest is further configured to rotate relative to a seatback of the vehicle seating assembly.
4. The vehicle seating assembly of Item 3, wherein the lock plate is fixed relative to the seatback.
5. The vehicle seating assembly of Item 1, wherein the spin plate is configured to rotate with the armrest and relative to the lock plate.
6. The vehicle seating assembly of Item 2, wherein the change in velocity is a change in linear velocity.
7. The vehicle seating assembly of Item 1, further comprising a spring, the spring being configured to apply the biasing force to the pawl.
8. The vehicle seating assembly of Item 7, wherein the spin plate further comprises an aperture, and wherein the pawl comprises a post, the aperture and the post supporting the spring.
9. The vehicle seating assembly of Item 1, further comprising a bracket, the bracket being rotationally fixed relative to the lock plate.
10. The vehicle seating assembly of Item 1, further comprising a shaft defining the axis, the spin plate being coupled to the shaft.
11. A vehicle seating assembly comprising:
   an armrest configured to rotate about an axis and between an up position and a down position;
   a spin plate configured to rotate with the armrest about the axis;
   a lock plate being configured to selectively rotate with the spin plate;
   a finger configured to move between an engaged position and a disengaged position relative to the lock plate, the finger preventing the lock plate from rotating with the spin plate when in the engaged position; and
   a pawl supported by the lock plate and the spin plate, the pawl being configured to move between an engaged position and a disengaged position, the pawl locking the spin plate to the lock plate when the finger is in the engaged position so as to inhibit movement of the armrest towards at least the down position.
12. The vehicle seating assembly of Item 11, further comprising a ball disposed in a receptacle, the ball being configured to move the finger from the disengaged position to the engaged position in response to a magnitude of a change in velocity of the receptacle that causes inertia of the ball to move within the receptacle.
13. The vehicle seating assembly of Item 12, further comprising a hat supported at least in part by the ball, the finger being supported by the hat.
14. The vehicle seating assembly of Item 13, wherein the hat is configured to pivot between a first position and a second position in response to the ball moving within the receptacle.
15. The vehicle seating assembly of Item 11, wherein the armrest is further configured to rotate relative to a seatback of the vehicle seating assembly.
16. The vehicle seating assembly of Item 15, wherein the finger is fixed relative to the seatback.
17. The vehicle seating assembly of Item 12, wherein the change in velocity is a change in linear velocity.
18. The vehicle seating assembly of Item 11, wherein the spin plate is disposed within the lock plate.
19. The vehicle seating assembly of Item 11, wherein at least a portion of the pawl is disposed between the spin plate and the lock plate.
20. A vehicle seating assembly comprising:
   an armrest configured to rotate about an axis and between an up position and a down position; and
   an inertia latch having a ratchet and being configured to move between a disengaged position and an engaged position to inhibit unintended movement of the armrest in the event of a collision.
21. A vehicle seating assembly comprising:
   an armrest configured to rotate about an axis and between an up position and a down position;
   a spin plate;
   one or more gears coupling the armrest to the spin plate so that the spin plate has a greater rate of angular rotation than the armrest;
   a tooth plate;
   a lock plate or pinion being configured to selectively rotate with the spin plate;
   a finger configured to move between an engaged position and a disengaged position relative to the lock plate or pinion, the finger preventing the lock plate or pinion from rotating when in the engaged position; and
   a pawl configured to move between an engaged position and a disengaged position, the pawl locking the spin plate to the tooth plate when the finger is in the engaged position.
22. The vehicle seating assembly of Item 21, further comprising a ball disposed in a receptacle, the ball being configured to move the finger from the disengaged position to the engaged position in response to a magnitude of a change in velocity of the receptacle that causes inertia of the ball to move within the receptacle.
23. The vehicle seating assembly of Item 22, further comprising a hat supported at least in part by the ball, the finger being supported by the hat.
24. The vehicle seating assembly of Item 23, wherein the hat is configured to pivot between a first position and a second position in response to the ball moving within the receptacle.
25. The vehicle seating assembly of Item 21, wherein the armrest is further configured to rotate relative to a seatback of the vehicle seating assembly.
26. The vehicle seating assembly of Item 25, wherein the finger is fixed relative to the seatback.
27. The vehicle seating assembly of Item 22, wherein the change in velocity is a change in linear velocity.
28. The vehicle seating assembly of Item 21, wherein the spin plate is disposed within the tooth plate.
29. The vehicle seating assembly of Item 21, wherein at least a portion of the pawl is disposed between the spin plate and the tooth plate.
30. An inertia latch configured to prevent rotation of an armrest about an axis and between an up position and a down position, comprising:
   a spin plate;
   one or more gears configured to couple the armrest to the spin plate;
   a tooth plate;
   a lock plate or pinion being configured to selectively rotate with the spin plate;
      and
   a pawl configured to selectively prevent rotation of the spin plate relative to the tooth plate.
31. The inertia latch of Item 30, wherein the spin plate has a greater rate of angular rotation than the armrest.

## Claims

1. A vehicle seating assembly comprising:
an armrest (22) configured to rotate about an axis and between an up position (30) and a down position (32);
a lock plate (46);
a spin plate (64) configured to rotate with the armrest about the axis and having a channel;
a pawl (72) disposed relative to the channel so as to move between a disengaged position and an engaged position, the pawl being biased to move towards the disengaged position by a biasing force, the pawl being disengaged from the lock plate when the pawl is in the disengaged position so as to allow the armrest to move between the up position and the down position, and the pawl engaging with the lock plate when the pawl is in the engaged position so as to inhibit movement of the armrest towards at least the down position; and
one or more gears (200);
wherein the pawl is configured to move from the disengaged position to the engaged position when a magnitude of a change in velocity of the spin plate causes inertia of the pawl to overcome the biasing force.

2. The vehicle seating assembly of Claim 1, wherein the armrest is further configured to rotate relative to a seatback (24) of the vehicle seating assembly; or optionally
wherein the lock plate is fixed relative to the seatback.

3. The vehicle seating assembly of Claim 1, wherein the spin plate is configured to rotate with the armrest and relative to the lock plate.

4. The vehicle seating assembly of Claim 2, wherein the change in velocity is a change in linear velocity.

5. The vehicle seating assembly of Claim 1, further comprising a spring, the spring being configured to apply the biasing force to the pawl; or optionally
wherein the spin plate further comprises an aperture, and wherein the pawl comprises a post, the aperture and the post supporting the spring.

6. The vehicle seating assembly of Claim 1, further comprising a bracket (84), the bracket being rotationally fixed relative to the lock plate; or optionally
further comprising a shaft defining the axis, the spin plate being coupled to the shaft.

7. The vehicle seating assembly of claim 1,
wherein the lock plate is configured to selectively rotate with the spin plate; and further comprising
a finger (172) configured to move between an engaged position and a disengaged position relative to the lock plate, the finger preventing the lock plate from rotating with the spin plate when in the engaged position; and wherein
the pawl is supported by the lock plate and the spin plate, the pawl being configured to move between an engaged position and a disengaged position, the pawl locking the spin plate to the lock plate when the finger is in the engaged position so as to inhibit movement of the armrest towards at least the down position.

8. The vehicle seating assembly of Claim 7, further comprising a ball (150) disposed in a receptacle, the ball being configured to move the finger from the disengaged position to the engaged position in response to a magnitude of a change in velocity of the receptacle that causes inertia of the ball to move within the receptacle; and optionally
further comprising a hat (176) supported at least in part by the ball, the finger being supported by the hat; and optionally
wherein the hat is configured to pivot between a first position and a second position in response to the ball moving within the receptacle; or optionally
wherein the armrest is further configured to rotate relative to a seatback of the vehicle seating assembly; or optionally
the finger is fixed relative to the seatback.

9. The vehicle seating assembly of Claim 8, wherein the ball is being configured to move the finger from the disengaged position to the engaged position in response to a magnitude of a change in velocity of the receptacle that causes inertia of the ball to move within the receptacle; , wherein the change in velocity is a change in linear velocity.

10. The vehicle seating assembly of Claim 8, wherein the spin plate is disposed within the lock plate; or optionally wherein at least a portion of the pawl is disposed between the spin plate and the lock plate.

11. The vehicle seating assembly of claim 1, further comprising a tooth plate; in which the pawl is configured to move between the engaged position and the disengaged position with the pawl locking the spin plate to the tooth plate when the finger is in the engaged position.

12. The vehicle seating assembly of Claim 11, further comprising a ball (150) disposed in a receptacle, the ball being configured to move the finger from the disengaged position to the engaged position in response to a magnitude of a change in velocity of the receptacle that causes inertia of the ball to move within the receptacle; or optionally
further comprising a hat (176) supported at least in part by the ball, the finger being supported by the hat; and optionally
wherein the hat is configured to pivot between a first position and a second position in response to the ball moving within the receptacle.

13. The vehicle seating assembly of Claim 11, wherein the armrest is further configured to rotate relative to a seatback of the vehicle seating assembly; and optionally
wherein the finger is fixed relative to the seatback; or optionally further comprising a ball (150) disposed in a receptacle, the ball being configured to move the finger from the disengaged position to the engaged position in response to a magnitude of a change in velocity of the receptacle that causes inertia of the ball to move within the receptacle wherein the change in velocity is a change in linear velocity; or optionally

14. The vehicle seating assembly of Claim 11, wherein the spin plate is disposed within the tooth plate.

15. The vehicle seating assembly of Claim 11, wherein at least a portion of the pawl is disposed between the spin plate and the tooth plate.
